# FASCICULE DE BREVET EUROPEEN

(11) **EP 2 753 467 B1**
(45) Date de publication et mention de la délivrance du brevet: **06.05.2015**
(21) Numéro de dépôt: 12773021.6
(22) Date de dépôt: 05.09.2012
(51) Int. Cl.: B29C 70/48, B29C 70/54, B29C 70/46, B29C 33/10, F01D 21/04, B29C 70/68, F01D 5/28, F01D 25/24, B29L 31/30

(54) **PROCEDE ET DISPOSITIF DE FABRICATION D'UNE PIECE CYLINDRIQUE EN MATERIAU COMPOSITE**
VERFAHREN UND VORRICHTUNG ZUR HERSTELLUNG VON EINEM ZYLINDRISCHEN TEIL AUS EINEM VERBUNDSTOFF
METHOD AND DEVICE FOR MANUFACTURING A CYLINDRICAL PART FROM COMPOSITE MATERIAL

(30) Priorité: 05.09.2011 FR 1157858
(43) Date de publication de la demande: 16.07.2014
(73) Titulaire: Snecma, 75015 Paris (FR)
(72) Inventeur: VARIN, Franck, Bernard, Léon, F-77550 Moissy-Cramayel Cedex (FR); GODON, Thierry, F-77550 Moissy-Cramayel Cedex (FR)
(74) Mandataire: Gevers France
(86) Numéro de dépôt international: PCT/FR2012/051988
(87) Numéro de publication internationale: WO 2013/034852

(56) Documents cités:
- EP-A1- 1 134 069
- EP-A1- 1 932 653

## Description

### Domaine de l'invention

La présente invention porte sur la fabrication d'une pièce cylindrique, notamment axisymétrique, en matériau composite comportant une structure fibreuse de renfort noyée dans une matrice de résine organique polymérisée.

### Art antérieur

Un moyen pour fabriquer des pièces en matériau composite consiste tout d'abord à réaliser une préforme de la pièce avec des fibres orientées selon une ou plusieurs directions en fonction de la résistance mécanique souhaitée. La structure fibreuse est ensuite intégrée dans une enceinte fermée de moulage de manière à l'imprégner d'une résine synthétique que l'on injecte sous pression dans le moule à l'état fluide. Ensuite la résine est polymérisée. Cette technique est connue sous la dénomination de moulage par transfert de résine ou l'acronyme RTM de sa désignation anglaise *resin transfer moulding.* L'introduction de la résine et l'élimination du gaz interstitiel entre les fibres dans le moule peuvent être assistées par la création d'une dépression du côté du moule opposé à celui de l'injection.

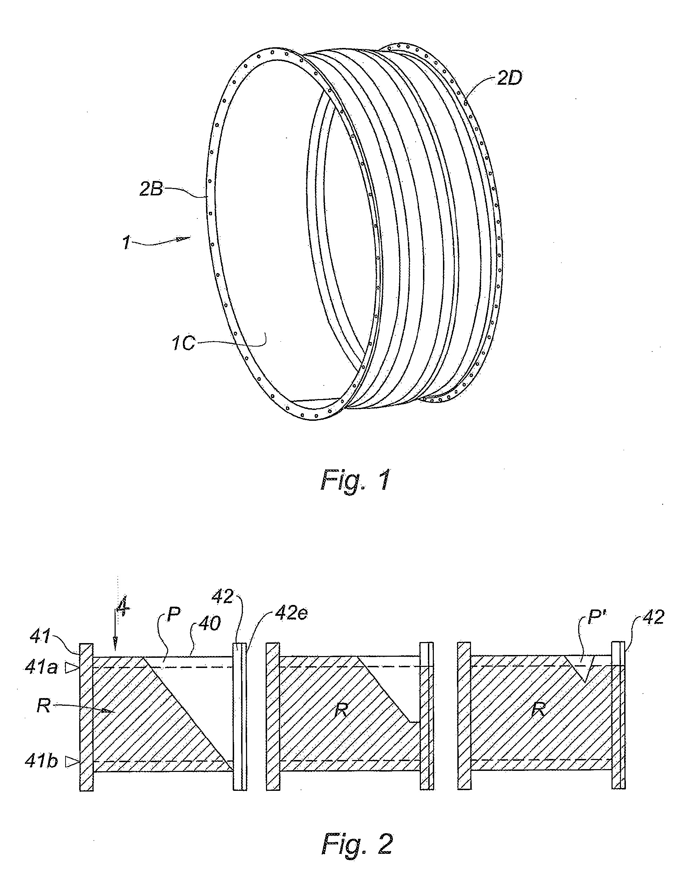

Il est connu de réaliser par cette technique des pièces cylindriques, telles que des carters de soufflante de turboréacteur. Un carter 1 est représenté sur la figure 1. Il est constitué d'une seule pièce de forme axisymétrique avec une partie cylindrique 1C d'épaisseur non constante d'une extrémité à l'autre, en particulier avec une surépaisseur au droit de la zone balayée par les pales de la soufflante pour absorber l'énergie d'impact en cas de rupture de pale. Cette partie cylindrique est bordée de deux brides 2B et 2D, radiales et externes. Les éléments amont et aval de la nacelle de soufflante du moteur sont fixés au carter par ces brides.

La fabrication de cette pièce en particulier comprend la réalisation de la préforme par enroulement d'une structure fibreuse appropriée autour d'un mandrin cylindrique terminé par des flancs radiaux pour la mise en forme des brides. La structure fibreuse peut être réalisée, par exemple, par tissage tridimensionnel avec épaisseur évolutive comme cela est décrit dans le brevet EP 1 961 923 au nom de la demanderesse. La préforme fibreuse tubulaire forme ainsi une seule pièce avec éventuellement pour un carter des parties de renfort correspondant aux brides.

Ensuite des éléments de moule sont disposés sur la préforme et la recouvrent pour l'enfermer dans une enceinte. Une mise en compression radiale de la préforme est éventuellement prévue pour réduire le foisonnement de la structure fibreuse. L'enceinte comprend, à une extrémité axiale de la partie cylindrique, au niveau d'une bride, un moyen d'alimentation de la résine avec un ou plusieurs orifices d'injection de résine répartis le long du bord de l'enceinte autour de l'axe du cylindre. Eventuellement des canaux de distribution sont associés à ces injecteurs. A l'autre extrémité, au niveau de la bride également, une cavité annulaire est ménagée dans le prolongement de la préforme avec des orifices d'évent de mise en communication avec une source de vide.

Afin d'assurer un remplissage équilibré de l'enceinte du moule et une montée homogène de la résine tout le long de la périphérie de l'enceinte de moulage, après réalisation de la préforme et fermeture du moule, il est usuel de disposer celui-ci verticalement avec les moyens d'injection de résine en partie basse et le canal annulaire d'évent sur la partie haute. De cette façon, la résine pénètre dans l'enceinte le long de la préforme formant la bride située dans la partie inférieure de celle-ci ; puis le front de résine s'élève progressivement et uniformément jusqu'à atteindre la bride supérieure communiquant avec le canal d'évent.

Cette méthode d'injection de la résine donne de très bons résultats en termes de vitesse et d'homogénéité de remplissage de l'enceinte du moule.

Cependant on rencontre le problème suivant : d'une part la mise en place de la préforme tubulaire par bobinage de la structure fibreuse sur le mandrin interne et l'assemblage du moule sont des opérations qui sont réalisées alors que la pièce est en position horizontale et, d'autre part, les carters de soufflante de turboréacteurs de moyenne et grande puissance sont de grandes dimensions avec un diamètre par exemple d'au moins deux mètres. Il s'ensuit que la manutention du moule, qui peut peser de 5 à 25 tonnes, est une opération très délicate avec des risques de SSE (Santé Sécurité Environnement) pour les opérateurs et qui en outre nécessite la mise en oeuvre d'un outillage onéreux.

Une solution serait donc de conserver le moule à l'horizontale pendant la phase de remplissage du moule. Les essais réalisés ont montré malheureusement une répartition non satisfaisante de la résine, comme cela est illustré sur la figure 2. Le moule 4 comporte une enceinte de moulage à l'intérieur duquel la préforme fibreuse est maintenue comprimée. Le moule comprend une section centrale 40, annulaire, entre deux parois cylindriques coaxiale. Une première extrémité 41 de l'enceinte, conformée pour ménager une bride radiale comprend des moyens d'alimentation en résine, injecteurs 41a, 41b, etc. répartis sur le pourtour de la première extrémité 41. La seconde extrémité 42, opposée à la première, est également conformée pour ménager une bride radiale. Un canal annulaire d'évent 42e est ouvert le long de la seconde extrémité. Les moyens d'injection 41a ,41b... sont en communication avec une source de résine fluide sous pression non représentée et le canal d'évent 42e est en communication avec une source de vide. Les trois schémas de la figure illustrent trois étapes du remplissage de l'enceinte avec imprégnation de la préforme qu'elle contient. La résine R est représentée en zones hachurées. La distribution du fluide R est faite tout le long de l'extrémité d'alimentation 41 mais en raison de la gravité, la partie inférieure de la préforme fibreuse dans l'enceinte 40 est complètement imprégnée avant la partie supérieure. Dans sa progression, schéma central, le fluide R remonte alors le long du canal d'évent 42e à l'extrémité opposée 42. Les essais ont montré, schéma de droite, qu'une zone P' au moins, dans la partie haute de la préforme à proximité du canal d'évent 42e était peu ou mal imprégnée. En effet dans la partie haute du moule, en position horizontale, le front de résine parvient difficilement jusqu'au canal d'évent 42e car le canal d'évent est rempli par la résine provenant de la partie basse avant que le front en partie haute ne l'atteigne. Une mauvaise imprégnation conduit à des propriétés mécaniques dans la zone considérée, plus faibles et non acceptables.

Le document EP 1 134 069 A1 divulgue un procédé de fabrication d'une pièce cylindrique conformément au préambule de la revendication 1 et un dispositif selon le préambule de la revendication 4.

### Objet de l'invention

Le présent déposant s'est donc fixé comme objectif de maintenir le moule en position horizontale, sans le faire pivoter verticalement de 90°, tout en améliorant son remplissage.

On parvient à cet objectif, conformément à l'invention, avec un procédé de fabrication d'une pièce cylindrique en matériau composite selon la revendication 1.

En sectorisant le canal d'évent, on permet de contrôler de manière indépendante le remplissage de l'enceinte dans les zones dont les secteurs d'évent sont dans le prolongement. Cette maîtrise du remplissage permet de retrouver la répartition homogène du fluide dans la préforme fibreuse que l'on connaît avec un moule en position verticale.

Avantageusement, on maîtrise encore mieux la répartition du fluide pendant le remplissage en alimentant l'enceinte en résine par au moins deux injecteurs répartis sur le pourtour de la première extrémité axiale. Dans ce cas, de préférence, lesdits secteurs d'évents de la seconde extrémité sont agencés chacun dans le prolongement d'un injecteur de la première extrémité. Plus particulièrement en centrant les secteurs d'évent en face des points d'injections on assure un tirage plus uniforme de la résine au travers de la préforme.

L'invention porte également sur un dispositif de moulage pour la mise en oeuvre du procédé pour la fabrication d'une pièce cylindrique selon la revendication 4.

Ce mode de réalisation est particulièrement simple à mettre en oeuvre et ne nécessite pas de transformation importante de l'installation de moulage.

L'invention vise en particulier la réalisation d'une pièce cylindrique telle qu'un carter de turbomachine avec au moins une bride à une extrémité axiale, ladite paroi d'extrémité formant la bride.

Dans cette application le secteur d'anneau formant évent peut être ménagé soit sur la partie radiale amont de ladite paroi formant la bride soit sur la partie radiale aval de ladite paroi formant la bride ou encore sur la partie longitudinale de la paroi formant la bride. L'évent peut aussi être formé d'une combinaison de ces secteurs d'anneau.

Dans un mode de réalisation préféré le dispositif de moulage comprend à la première extrémité au moins deux injecteurs de résine, les dits secteurs d'anneau formant évents étant disposés chacun dans le prolongement d'un injecteur et centré sur lui.

### Présentation des figures

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
La figure 1 représente vu en perspective un exemple de carter de soufflante de turboréacteur ;
La figure 2 montre, de façon schématique en trois étapes, la progression du remplissage d'une enceinte de moulage d'une pièce cylindrique disposée horizontalement, sans le procédé de l'invention.
La figure 3 montre, en coupe axiale selon III-III de la figure 4, un mode de réalisation de la seconde extrémité du dispositif de moulage avec un agencement du canal d'évent conforme à l'invention ;
La figure 4 montre en coupe transversale selon IV-IV de la figure 3, la seconde extrémité du dispositif de moulage.
La figure 5 est un schéma illustrant l'évolution du front de résine pendant le remplissage de l'enceinte de moulage et l'imprégnation de la préforme.

### Description détaillée d'un mode de réalisation de l'invention

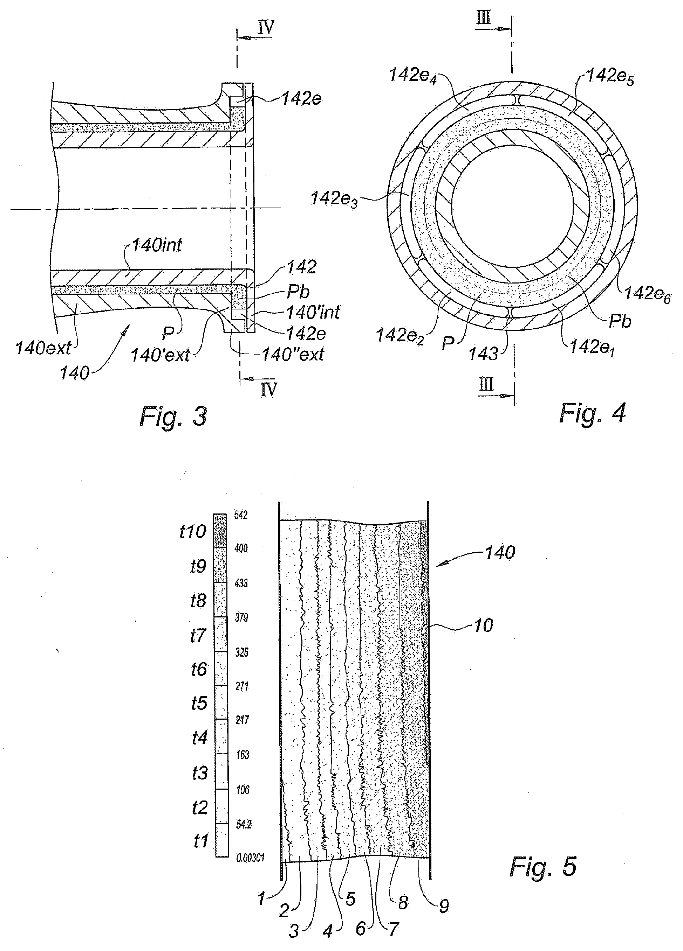

En se reportant aux figures 3 et 4 qui sont des vues partielles d'un dispositif de moulage 140 selon l'invention, on a représenté la préforme P comprimée à l'intérieur des parois cylindriques, intérieure 140int et extérieure 140ext. La préforme est une structure fibreuse qui a été auparavant mise en place sur le mandrin que forme la paroi intérieure 140int.

La structure fibreuse peut être de type unidirectionnel (ID) par exemple formée par bobinage d'un fil ou câble, de type bidimensionnel (2D), par exemple formée par drapage de strates fibreuses, ou tridimensionnel (3D), par exemple formée par tissage, tressage ou tricotage 3D ou par superposition et liaison entre elles de strates fibreuses.

Dans ce dernier cas, les strates fibreuses peuvent être liées entre elles mécaniquement par des éléments s'étendant à travers les strates. Cela peut être obtenu par aiguilletage avec déplacement de fibres hors du plan des strates, par implantation de fils ou éléments rigides (aiguilles ou tiges) à travers les strates ou encore par couture. Un exemple de structure fibreuse est décrit dans la demande de brevet EP 1 961 923.

Sur cette figure 3, la seconde extrémité 142 du côté du canal d'évent comprend un espace radial ménagé entre les parois radiales d'extrémité des éléments du moule 140'int et 140'ext. Dans cet espace se trouve la partie radial Pb formant bride de la préforme P. La préforme ne remplit pas entièrement cet espace radial. Un canal de mise en dépression de l'enceinte, canal d'évent, est ménagé entre la préforme Pb et les parois de l'outillage. Ce canal d'évent est conformément à l'invention subdivisé en plusieurs secteurs d'évents, ici à titre d'exemple six secteurs 142 e1 à e6 séparés par des cloisons 143 radiales. Les cloisons peuvent être réalisées de différentes façons.

Selon un mode de réalisation, une pluralité de rainures en arc de cercle est usinée dans l'outillage sur le pourtour de la zone d'extrémité 142 dans la partie longitudinale 140"ext de la paroi formant la bride.

Selon un autre mode de réalisation une rainure annulaire continue est usinée dans l'outillage et des moyens de séparation formant cloisons, tels que des cales ou bien de la mousse, sont rapportés à l'intérieur de la rainure.

Ces secteurs d'évents sont visibles sur la figure 4. Les secteurs d'évents sont ainsi isolés les uns des autres, et communiquent chacun indépendamment avec l'entrée d'une ou de plusieurs pompes d'aspiration qui sont en dépression par rapport à la source de résine à l'autre extrémité du moule. A cette autre extrémité non représentée, une pluralité d'injecteurs de résine est disposée sur le pourtour du moule, non représentés.

Les secteurs d'évents en forme de secteur d'anneau peuvent être réalisés aussi sur la partie radiale amont, 140'ext, de la paroi de l'outillage formant la bride, ou encore sur la partie radiale aval, 140'int, de ladite paroi.

Les secteurs d'évent peuvent aussi ne pas être ménagés dans une seule des parois mais alterner d'un côté et de l'autre.

De préférence, l'injection de la résine est effectuée par un nombre d'injecteurs identique à celui des secteurs d'évents. De plus, chaque secteur est situé dans le prolongement d'un point d'injection en étant centré en face de celui-ci de manière à permettre un tirage le plus uniforme possible de la résine au travers de la préforme.

Le remplissage du dispositif s'effectue de la façon suivante. Après avoir mis en place la préforme, fermé l'enceinte de moulage et éventuellement comprimé la préforme en rapprochant radialement les éléments extérieurs du moule des éléments intérieurs, on introduit la résine sous pression simultanément par l'ensemble des points d'injection situé du coté de la première extrémité. En même temps on maintien les différents secteurs d'évent en dépression. L'effet de la dépression sur chacun des secteurs indépendamment des autres permet de compenser l'effet de la gravité sur le front de progression de la résine.

On a représenté sur la figure 5 un exemple d'évolution dans le temps du front de la résine le long de la structure fibreuse entre la première extrémité d'injection et la seconde extrémité avec les secteurs d'évents. Sur une durée de 542 s correspondant au remplissage, on a déterminé par simulation la forme du front à 10 moments t1 à t10 entre le départ de l'injection et la fin du remplissage. On constate que le front de résine progresse de façon homogène en restant sensiblement perpendiculaire à l'axe de l'outillage.

## Revendications

1. Procédé de fabrication d'une pièce cylindrique en matériau composite comprenant les étapes suivantes :
a. Mise en place d'une structure fibreuse (P) sur un mandrin horizontal (140int),
b. Formation d'une enceinte annulaire de moulage autour de la structure fibreuse et du mandrin,
c. Alimentation de l'enceinte en résine par une première extrémité axiale (141), tout en maintenant la seconde extrémité axiale (142) de l'enceinte à une pression inférieure à la pression d'alimentation de la résine, l'enceinte de moulage étant maintenue en position horizontale ou sensiblement horizontale
**caractérisé par le fait que** la seconde extrémité (142) comprend au moins deux secteurs d'évents (142 e1, 142 e2...) en forme de secteurs d'anneau maintenus, chacun de manière indépendante, à une pression inférieure à la dite pression d'alimentation.

2. Procédé selon la revendication 1, l'enceinte est alimentée en résine par au moins deux injecteurs répartis sur le pourtour de la première extrémité axiale (141).

3. Procédé selon la revendication 2, lesdits secteurs d'évents (142 e1, 142 e2) de la seconde extrémité (142) sont agencés chacun dans le prolongement d'un injecteur de la première extrémité.

4. Dispositif de moulage pour la mise en oeuvre du procédé selon l'une des revendications 1 à 3 pour la fabrication d'une pièce cylindrique avec une paroi d'extrémité de l'enceinte de moulage pourvue d'un canal d'évent, **caractérisé par le fait que** ledit canal d'évent est formé d'au moins deux secteurs (142 e1, 142 e2,...) d'anneau indépendants.

5. Dispositif selon la revendication précédente dont le canal d'évent est annulaire avec au moins deux secteurs d'anneau, séparés par des cloisons transversales (143).

6. Dispositif de moulage selon l'une des revendications 4 et 5 pour la réalisation d'une pièce telle qu'un carter de turbomachine avec au moins une bride à une extrémité axiale, ladite paroi d'extrémité (142) formant la bride.

7. Dispositif de moulage selon la revendication précédente comprenant un secteur d'anneau formant évent ménagé sur la partie radiale amont de ladite paroi formant la bride.

8. Dispositif selon l'une des revendications 4 à 7 comprenant un secteur d'anneau formant évent ménagé sur la partie radiale aval de ladite paroi formant la bride.

9. Dispositif selon l'une des revendications 4 à 8 comprenant un secteur d'anneau formant évent ménagé sur la partie longitudinale de la paroi formant la bride.

10. Dispositif selon l'une des revendications 4 à 9 comprenant à la première extrémité au moins deux injecteurs de résine, les dits secteurs d'anneau formant évents étant disposés chacun dans le prolongement d'un injecteur et centré sur lui..

## Patentansprüche

1. Verfahren zur Herstellung eines zylindrischen Teils aus Verbundmaterial, umfassend die folgenden Schritte:
a. Anordnen einer Faserstruktur (P) auf einem horizontalen Dorn (140int),
b. Formen einer ringförmigen Formkammer um die faserige Struktur und den Dorn herum,
c. Speisen der Kammer mit Harz über ein erstes axiales Ende (141) bei gleichzeitigem Halten des zweiten axialen Endes (142) der Kammer auf einem Druck, der geringer als der Speisedruck des Harzes ist, wobei die Formkammer in horizontaler oder im Wesentlichen horizontaler Position gehalten wird, **dadurch gekennzeichnet, dass** das zweite Ende (142) mindestens zwei Entlüftungssektoren (142 e1, 142 e2 usw.) in Form von Ringsektoren umfasst, die jeweils unabhängig voneinander auf einem Druck gehalten werden, der geringer als der Speisedruck ist.

2. Verfahren nach Anspruch 1, wobei die Kammer durch mindestens zwei Einspritzdüsen mit Harz gespeist wird, die über den Umfang des ersten axialen Endes (141) verteilt sind.

3. Verfahren nach Anspruch 2, wobei die Entlüftungssektoren (142 e1, 142 e2) des zweiten Endes (142) jeweils in der Verlängerung einer Einspritzdüse des ersten Endes angeordnet sind.

4. Formvorrichtung zur Durchführung des Verfahrens nach einem der Ansprüche 1 bis 3 zur Herstellung eines zylindrischen Teils mit einer Endwand der Formkammer, die mit einem Entlüftungskanal versehen ist, **dadurch gekennzeichnet, dass** der Entlüftungskanal von mindestens zwei unabhängigen Ringsektoren (142 e1, 142 e2 usw.) gebildet ist.

5. Vorrichtung nach dem vorhergehenden Anspruch, wobei der Entlüftungskanal ringförmig ist mit mindestens zwei Ringsektoren, die durch quergerichtete Trennwände (143) getrennt sind.

6. Formvorrichtung nach einem der Ansprüche 4 und 5 zur Herstellung eines Teils wie ein Gehäuse eines Turbotriebwerks mit mindestens einem Flansch an einem axialen Ende, wobei die Endwand (142) den Flansch bildet.

7. Formvorrichtung nach dem vorhergehenden Anspruch, die einen eine Entlüftung bildenden Ringsektor umfasst, der an dem stromaufwärtigen radialen Teil der den Flansch bildenden Wand vorgesehen ist.

8. Vorrichtung nach einem der Ansprüche 4 bis 7, die einen eine Entlüftung bildenden Ringsektor umfasst, der an dem stromabwärtigen radialen Teil der den Flansch bildenden Wand vorgesehen ist.

9. Vorrichtung nach einem der Ansprüche 4 bis 8, die einen eine Entlüftung bildenden Ringsektor umfasst, der an dem längsgerichteten Teil der den Flansch bildenden Wand vorgesehen ist.

10. Vorrichtung nach einem der Ansprüche 4 bis 9, die an dem ersten Ende mindestens zwei Harz-Einspritzdüsen umfasst, wobei die Entlüftungen bildenden Ringsektoren jeweils in der Verlängerung einer Einspritzdüse angeordnet und auf ihr zentriert sind.

## Claims

1. A method for manufacturing a cylindrical part from composite material, comprising the following steps:
a. putting in place a fibrous structure (P) on a horizontal mandrel (140int),
b. forming an annular molding enclosure around the fibrous structure and the mandrel,
c. supplying resin to the enclosure via a first axial end (141) while keeping the second axial end (142) of the enclosure at a pressure below the resin supply pressure, the molding enclosure being kept in a horizontal or substantially horizontal position,
**characterized in that** the second end (142) comprises at least two vent sectors (142 e1, 142 e2, ...) in the form of ring sectors, each independently kept at a pressure below said supply pressure.

2. The method as claimed in claim 1, wherein the enclosure is supplied with resin by at least two injectors distributed over the perimeter of the first axial end (141).

3. The method as claimed in claim 2, wherein said vent sectors (142 e1, 142 e2) of the second end (142) are each arranged in the continuation of an injector of the first end.

4. A molding device for implementing the method as claimed in one of claims 1 to 3 for manufacturing a cylindrical part, wherein one end wall of the molding enclosure is provided with a vent duct, **characterized in that** said vent duct is formed by at least two independent ring sectors (142 e1, 142 e2, ...).

5. The device as claimed in the preceding claim, wherein the vent duct is annular, with at least two ring sectors separated by transverse partitions (143).

6. The molding device as claimed in either of claims 4 and 5 for producing a part such as a casing for a turbomachine having at least one flange at one axial end, said end wall (142) forming the flange.

7. The molding device as claimed in the preceding claim, comprising a ring sector forming a vent created on that radial portion which is upstream of said wall forming the flange.

8. The device as claimed in one of claims 4 to 7, comprising a ring sector forming a vent created on that radial portion which is downstream of said wall forming the flange.

9. The device as claimed in one of claims 4 to 8, comprising a ring sector forming a vent created on the longitudinal portion of the wall forming the flange.

10. The device as claimed in one of claims 4 to 9, comprising at the first end at least two resin injectors, each of said ring sectors forming vents being arranged in the continuation of an injector and centered thereon.
